# FASCICULE DE BREVET EUROPEEN

(11) **EP 4 519 159 B1**
(45) Date de publication et mention de la délivrance du brevet: **04.03.2026**
(21) Numéro de dépôt: 23725201.0
(22) Date de dépôt: 05.05.2023
(51) Int. Cl.: B63H 9/069, B63H 9/071, B63H 9/072

(54) **PROCÉDÉ DE FONCTIONNEMENT D'UN DISPOSITIF DE TRACTION COMPRENANT UN CERF-VOLANT POUR UNE EMBARCATION FLOTTANTE**
VERFAHREN ZUM BETREIBEN EINER ZUGVORRICHTUNG MIT EINEM DRACHEN FÜR EIN SCHWIMMENDES SCHIFF
METHOD FOR OPERATING A TRACTION DEVICE COMPRISING A KITE FOR A FLOATING VESSEL

(30) Priorité: 05.05.2022 FR 2204268
(43) Date de publication de la demande: 12.03.2025
(73) Titulaire: Beyond the Sea, 33260 La Teste de Buch (FR)
(72) Inventeur: PARLIER, Yves, 33120 ARCACHON (FR); TORRE, Armand, 11370 LEUCATE (FR)
(74) Mandataire: Novaimo
(86) Numéro de dépôt international: PCT/EP2023/061932
(87) Numéro de publication internationale: WO 2023/214008

(56) Documents cités:
- FR-A1- 2 941 436

## Description

### Domaine technique de l'invention

L'invention concerne un procédé de fonctionnement d'un dispositif de traction. L'invention porte encore sur un dispositif de traction comprenant des éléments pour la mise en œuvre d'un tel procédé de fonctionnement. L'invention porte encore sur une embarcation flottante ou un engin terrestre comprenant un tel dispositif de traction. L'invention porte enfin sur un produit programme d'ordinateur pour mettre en œuvre un tel procédé de fonctionnement. L'invention porte encore sur un support d'enregistrement de données pour mettre en œuvre un tel procédé de fonctionnement. L'invention porte encore sur un signal d'un support de données pour mettre en œuvre un tel procédé de fonctionnement. L'invention porte encore sur l'utilisation d'un bloqueur au cours d'un tel procédé de fonctionnement.

### Etat de la technique antérieure

Un cerf-volant de traction d'une embarcation flottante, telle que par exemple un bateau ou un navire, comme connu par exemple du document FR 2 941 436 A1, est délicat à commander lors de son lancement depuis un pont de l'embarcation flottante, lors de sa récupération sur le pont, mais aussi en vol.

Par conséquent, il existe des risques importants de voir le cerf-volant s'abîmer en mer ou par contact avec l'embarcation flottante ou le sol lors de manœuvres. Le lancement classique de ce type de cerf-volant nécessite le déroulement complet des lignes destinées à le lier mécaniquement à l'embarcation flottante. Cela est possible à terre mais beaucoup plus délicat en mer. Une solution consiste à laisser dériver à la surface de l'eau le cerf-volant et le décoller une fois les lignes déroulées. Une autre solution consiste à utiliser une embarcation spécifique pour le décoller dans le vent et, a fortiori, pour le récupérer. De telles solutions ne sont pas satisfaisantes.

### Présentation de l'invention

Le but de l'invention est de fournir un procédé de fonctionnement d'un dispositif de traction par cerf-volant remédiant aux inconvénients ci-dessus. En particulier, l'invention permet d'automatiser le lancement d'un cerf-volant, son vol pour tracter une embarcation flottante ou un engin terrestre roulant et/ou glissant, et sa récupération.

### Résumé de l'invention

Pour atteindre cet objectif, l'invention porte sur un procédé de fonctionnement d'un dispositif de traction d'une embarcation flottante ou d'un engin terrestre roulant et/ou glissant, comprenant un cerf-volant incluant :
- une aile munie d'un bord d'attaque,
- une ligne d'envoi,
- au moins une ligne avant équipée d'un bloqueur, et
- des lignes arrière,
le procédé comprenant les étapes suivantes :
- une étape de prise d'altitude de l'aile en ne la retenant que par la ligne d'envoi, les lignes avant et arrière restant lâches, suivie, une fois une altitude atteinte, notamment une fois une altitude cible atteinte, de
- une étape de blocage de l'au moins une ligne avant par activation du bloqueur permettant de lier mécaniquement l'au moins une ligne avant à l'embarcation flottante ou à l'engin terrestre roulant et/ou glissant, et une étape de relâchement et de maintien lâche de la ligne d'envoi.

Le procédé peut comprendre, simultanément ou après l'étape de blocage, une étape de tension des lignes arrière de sorte à les utiliser pour piloter l'aile.

Le procédé peut comprendre une étape préalable de gonflage du bord d'attaque de l'aile, notamment une étape de gonflage de l'aile par une mise dans le vent de l'aile, avant l'étape de prise d'altitude.

L'étape de prise d'altitude peut comprendre une étape de hissage de l'aile le long d'un mât de l'embarcation flottante ou de l'engin terrestre roulant et/ou glissant.

Le procédé peut comprendre une étape d'orientation automatique de l'aile par rapport au vent, notamment par l'intermédiaire d'une potence articulée par rapport à un tel mât.

L'étape de prise d'altitude peut comprendre une étape de libération de l'aile par rapport à un tel mât, puis une étape de prise d'altitude de l'aile libérée d'un tel mât.

L'étape de blocage, en particulier l'étape de blocage, l'étape de tension et l'étape de relâchement et de maintien lâche, peuvent être suivies par une étape de pilotage par commande des lignes arrière pour piloter l'aile dans un mode de vol de l'aile, notamment par l'intermédiaire d'au moins un motoréducteurs d'un dispositif de pilotage.

Suite à l'étape de pilotage, on peut procéder à :
- une étape de tension de la ligne d'envoi, et
- une étape de relâchement et de maintien lâche des lignes avant et arrière, notamment en enroulant la ligne d'envoi et/ou en déroulant les lignes avant et arrière.

On peut enrouler la ligne d'envoi de sorte à ramener l'aile sur l'embarcation flottante ou sur l'engin terrestre roulant et/ou glissant.

L'invention porte encore sur un dispositif de traction d'une embarcation flottante ou d'un engin terrestre roulant et/ou glissant comprenant un ensemble d'actionneurs, notamment de type motoréducteur et/ou bloqueur, le dispositif comprenant des éléments matériels et/ou logiciels mettant en œuvre le procédé tel que défini précédemment, notamment des éléments matériels et/ou logiciels conçus pour mettre en œuvre le procédé tel que défini précédemment, et/ou le dispositif comprenant des moyens pour mettre en œuvre le procédé tel que défini précédemment.

L'invention porte encore sur une embarcation flottante ou un engin terrestre roulant et/ou glissant comprenant un dispositif de traction tel que défini précédemment.

L'invention porte encore sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, le produit programme comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment ou un support d'enregistrement lisible par ordinateur comprenant des instructions qui, lorsqu'elles sont exécutées par un ordinateur, conduisent celui-ci à mettre en œuvre le procédé tel que défini précédemment.

L'invention porte encore sur un signal d'un support de données portant le produit programme d'ordinateur tel que défini précédemment.

L'invention porte encore sur l'utilisation d'un bloqueur du type formant une gaine tressée entourant une ligne pour retenir une aile d'un cerf-volant de traction d'une embarcation ou d'un engin terrestre, notamment pour retenir une aile d'un cerf-volant de traction d'une embarcation ou d'un engin terrestre dans le procédé tel que défini précédemment.

### Présentation des figures

D'autres avantages et caractéristiques ressortiront plus clairement de la description qui va suivre d'un mode de réalisation d'une embarcation flottante ou d'un engin terrestre roulant et/ou glissant et d'un mode d'exécution d'un procédé de fonctionnement d'un dispositif de traction, et des dessins annexés, dans lesquels :
La figure 1 est une vue schématique partielle d'une embarcation flottante selon un mode de réalisation.
La figure 2 est une vue schématique d'un engin terrestre roulant et/ou glissant selon un mode de réalisation.
La figure 3 est une vue schématique d'un dispositif de traction d'une embarcation flottante ou d'un engin terrestre roulant et/ou glissant selon un mode de réalisation.
La figure 4 est une vue en perspective d'une platine du dispositif de traction selon un mode de réalisation.
La figure 5 est une vue de face d'un mât du dispositif de traction selon un mode de réalisation.
La figure 6 est une vue de détail du mât selon le mode de réalisation.
La figure 7 est une vue de détail en perspective d'une base du mât selon un mode de réalisation.
La figure 8 est une vue en perspective partielle du dispositif de traction selon le mode de réalisation.
La figure 9 est une vue de dessus d'un boîtier ouvert d'un dispositif de traction selon un mode de réalisation.

### Description détaillée

La direction selon laquelle une embarcation flottante se déplace en ligne droite, dans un plan parallèle au niveau de l'eau d'un plan d'eau, est définie comme étant la direction longitudinale. Par convention, la direction perpendiculaire à la direction longitudinale, située dans un plan parallèle au niveau de l'eau d'un plan d'eau, est nommée direction transversale. La troisième direction, perpendiculaire aux deux autres, est nommée direction verticale.

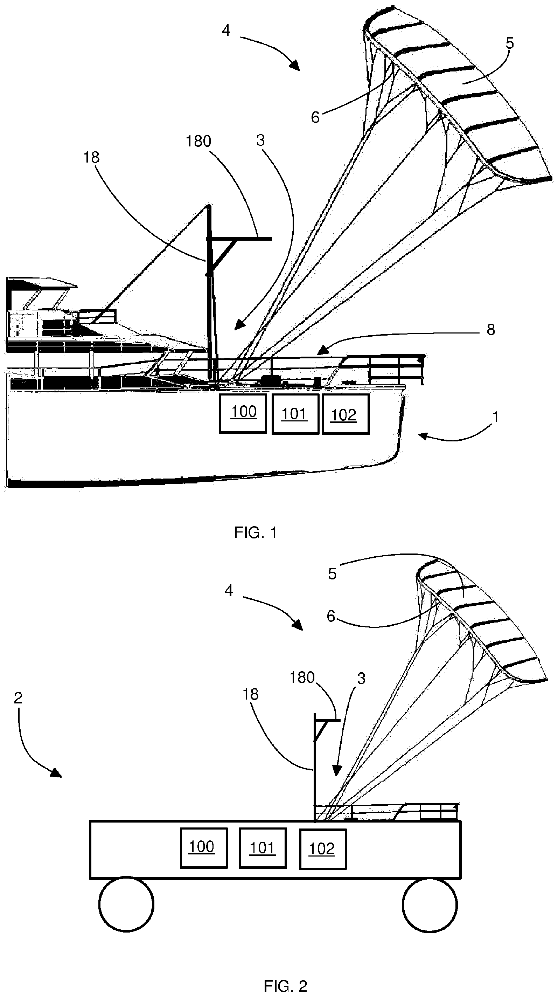

La figure 1 illustre schématiquement une embarcation flottante 1. Une telle embarcation flottante 1 est par exemple un bateau ou un navire.

La figure 2 illustre schématiquement un engin terrestre roulant et/ou glissant 2. Un tel engin est par exemple un véhicule destiné à être utilisé sur une étendue d'eau gelée et/ou sur du sable et/ou sur de la neige et/ou sur de l'herbe et/ou sur de la terre.

L'embarcation flottante 1, ou l'engin terrestre roulant et/ou glissant 2, comprend un dispositif de traction 3.

Le dispositif de traction 3 comprend un cerf-volant 4. Le cerf-volant 4 comprend, ou inclut, une aile 5. L'aile 5 est munie d'un bord d'attaque 6 ou comprend un bord d'attaque 6.

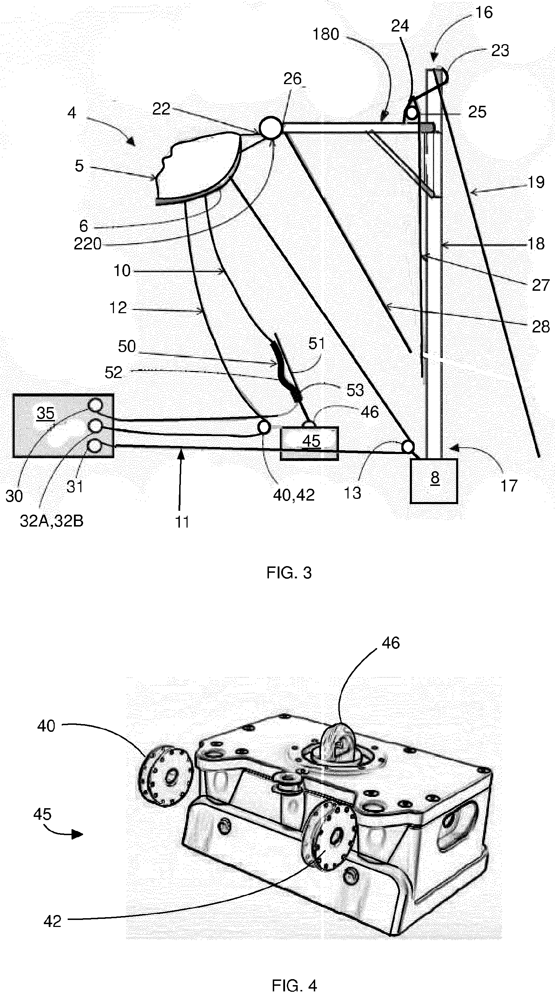

Comme illustré sur la figure 3, le cerf-volant 4 comprend une ligne d'envoi 11. De préférence, la ligne d'envoi 11 est une ligne centrale permettant le décollage de l'aile, la récupération de l'aile, et si besoin, la mise en sécurité de l'aile. Le cerf-volant 4 comprend encore au moins une ligne avant 10. De préférence, le cerf-volant 4 comprend deux lignes avant 10. Le cerf-volant 4 comprend encore au moins une ligne arrière 12. De préférence, le cerf-volant 4 comprend deux lignes arrière 12.

Alternativement, le cerf-volant 4 comprend au moins trois lignes avant 10 et au moins trois lignes arrière 12.

L'au moins une ligne avant 10 comprend ou est équipée d'un bloqueur 50. Le bloqueur 50 est par exemple un exemplaire commercialisé sous la marque déposée CONSTRICTOR de la société COUSIN TRESTEC. Le bloqueur 50 comprend une chaussette 52 ou un tube en matériau tressé venant entourer la ligne avant 10. Le bloqueur 50 comprend encore une commande 51, de type cordelette par exemple. Une traction sur la cordelette 51 engendre la libération du bloqueur, c'est-à-dire le déblocage de la ligne avant comprenant ce bloqueur. Le bloqueur 50 comprend encore une fixation 53 destinée à être fixée sur un point fixe, ou au moins temporairement fixe, de l'embarcation flottante ou de l'engin terrestre. Alternativement, le bloqueur 50 est du type à came et/ou à pincement et/ou à arcboutement. Le bloqueur est fixé à un anneau 46 monté sur une platine 45 fixée sur l'embarcation ou l'engin, comme illustré sur les figures 3, 4 et 8.

Avantageusement, l'embarcation flottante 1 comprend un pont 8 et un mât 18 agencé sur le pont 8.

Avantageusement, l'engin terrestre roulant et/ou glissant 2 comprend un châssis et un mât 18. Par exemple, le mât 18 est agencé au niveau du châssis, de préférence à l'avant de l'engin terrestre.

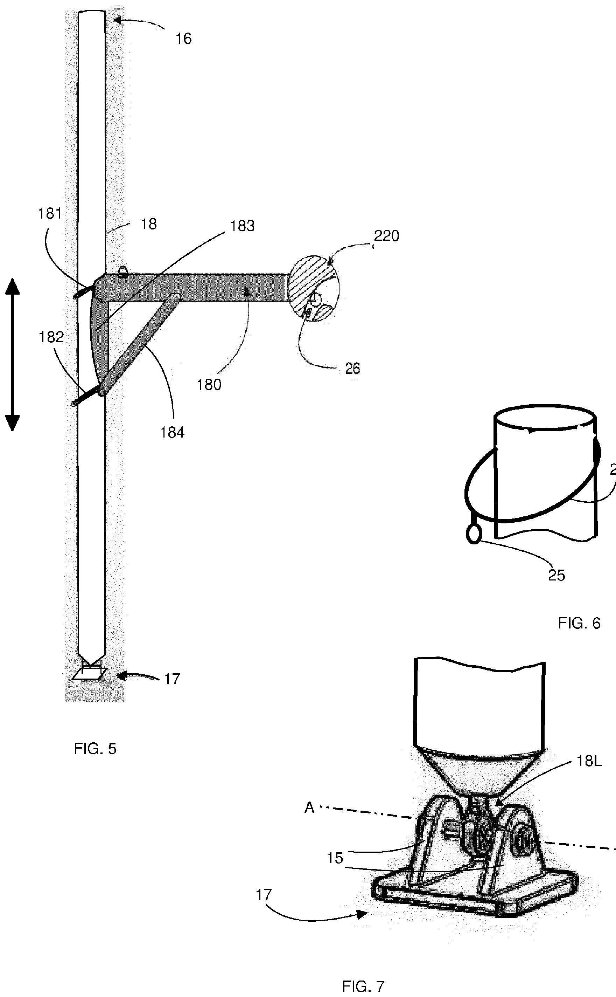

Comme illustré sur la figure 3, de préférence, au moins un hauban 19 assure le maintien du mât 18 et/ou permet d'orienter le mât 18 par rapport à une base 17 supportant le mât. De préférence, comme illustré sur les figures 5 et 7 notamment, la base 17 comprend une liaison de type rotule, ou sensiblement de type rotule, par rapport au mât 18. Par exemple, la base 17 comprend une chape 15 ayant un axe de pivotement A et le mât comprend une extrémité 18L du côté de la base 17 de type biellette à rotule. La base 17 est avantageusement fixée sur le pont 8 de l'embarcation flottante 1 ou le châssis de l'engin terrestre roulant et/ou glissant 2. Avantageusement, comme illustré sur les figures 1, 2, 3 et 5, le mât 18 comprend une potence 180. La potence 180 est pivotante autour du mât 18, c'est-à-dire orientable. De préférence, comme illustré sur la figure 5, la potence 180 peut encore coulisser le long du mât 18, notamment grâce à un moyen de retenu entourant la section du mât. Un tel moyen de retenu comprend par exemple un lien supérieur 181 et un lien inférieur 182. De préférence, la potence 180 comprend un support 183 et un renfort 184. Par exemple, le renfort 184 s'étend obliquement entre le support 183 et la potence 180.

Comme illustré notamment sur les figures 3 et 6, le sommet 16 du mât 18 comprend un moyen de coulissement 25 pour un lien, notamment un lien de type drisse 27. La drisse 27 permet de hisser la potence orientable 180 le long du mât 18. A noter que la potence 180 maintient l'aile 5 par l'intermédiaire d'un moyen de déconnexion 26. Le pivotement de la potence 180 par rapport au mât 18 lui permet de suivre le vent à la manière d'une girouette face au vent. Le moyen de coulissement 25 est par exemple une poulie. De préférence, un moyen de fixation 24 assure le maintien de la poulie 25 par rapport au sommet 16 du mât 18. Le moyen de fixation 24 est par exemple un anneau de diamètre suffisamment important pour être agencé autour de la section du mât. Avantageusement, l'anneau 24 est maintenu au mât par un moyen de fixation, par exemple un crochet 23 (figure 3), de sorte à permettre plusieurs degrés de liberté entre l'anneau 24 et le mât 18. Avantageusement, l'extrémité de la potence 180 agencée du côté de l'aile 5 et/ou le moyen de déconnexion 26 comprennent un moyen d'amortissement de sorte à protéger le bord d'attaque 6 en cas de mouvements du cerf-volant 5 vers cette extrémité. Avantageusement, le moyen d'amortissement 220 ou protection ou pare-chocs est en matériaux souple. Par exemple, le moyen d'amortissement enveloppe le moyen de déconnexion 26. Alternativement le moyen d'amortissement s'intercale entre l'aile et le moyen de déconnexion. Par exemple le moyen d'amortissement est gonflable.

En résumé, la potence 180 orientable (et éventuellement réglable en longueur) est hissée en haut du mât 18 à l'aide de la drisse 27. La potence 180 maintient l'aile 5 à son incidence de vol par l'intermédiaire de la ligne d'envoi 11. La rotation ou pivotement de la potence 180 autour du mât 18 permet de conserver l'aile 5 toujours face au vent et en bonne incidence de vol quelles que soient les variations de direction du vent relatif.

Par exemple, le moyen de déconnexion 26 est de type mousqueton largable entre la potence 180 et l'aile 5. Par exemple, une pantoire 22 est agencée entre l'aile 5 et le moyen de déconnexion 26. Avantageusement encore, un moyen de commande 28 de la déconnexion du moyen de déconnexion 26 est prévu. Le moyen de commande 28 est par exemple de type messager, c'est-à-dire un cordage ou lien souple permettant de tirer à distance sur le mousqueton largable 26 de sorte à déconnecter la potence 180 de l'aile 5, via la déconnexion avec la pantoire 22.

Ainsi, au cours du hissage de l'aile 5 le long du mât 18 par l'intermédiaire de la potence 180 libre en rotation autour de l'axe du mât, l'aile 5 s'oriente naturellement dans le lit du vent. Il en découle une stabilité de vol de l'aile 5 maintenue en vol captif entre le mousqueton 26 et la ligne d'envoi 11. En cas de mouvements relatifs résiduels ou chocs ou contacts entre le bord d'attaque 6 et la potence orientable 180, ils sont avantageusement amortis par le pare-choc 220.

Le dispositif de traction 3 comprend encore un boîtier 35 comprenant des actionneurs, par exemple de type motoréducteurs ou treuils ou treuils électriques 30, 31, 32A, 32B. Le boîtier 35 est avantageusement fixé sur le pont 8 de l'embarcation flottante 1 ou le châssis de l'engin terrestre roulant et/ou glissant 2. Eventuellement, le boîtier 35 est déplaçable, mobile, entre au moins deux positions distinctes. Par exemple, le boîtier 35 par lequel passe les efforts de traction de l'aile 5 est disposé à un emplacement optimal selon la configuration de l'embarcation flottante tractée ou de l'engin terrestre tracté. Ainsi, par exemple, le boîtier 35 est placé différemment selon la configuration de l'embarcation flottante, par exemple en termes de volume et/ou de poids d'une cargaison le cas échéant et/ou par exemple en termes d'emplacement de la cargaison.

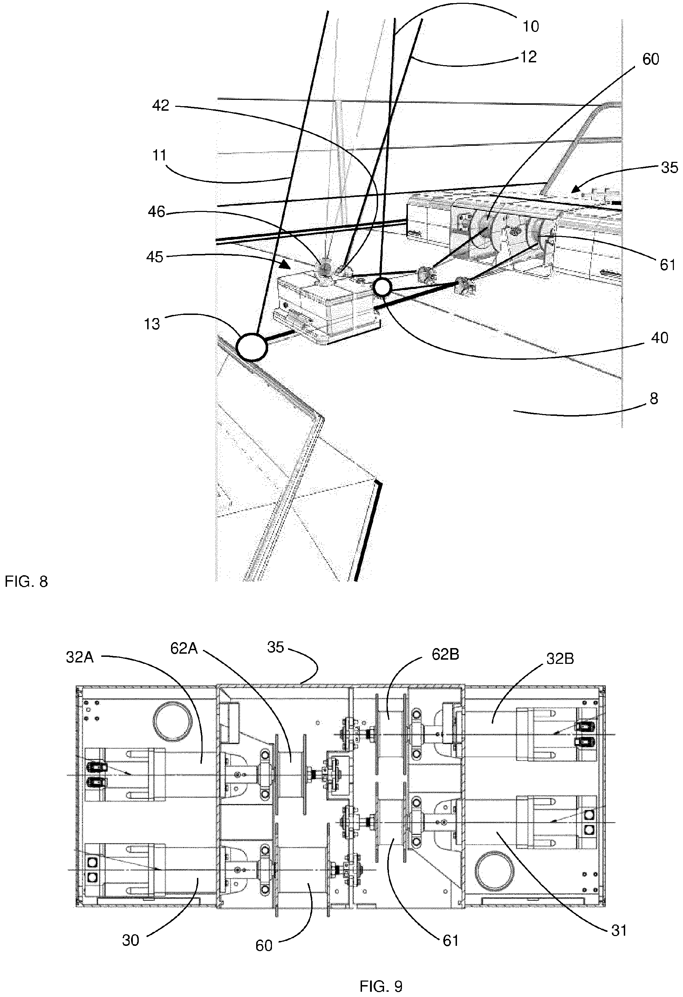

De préférence, comme illustré sur la figure 9, le boîtier 35 comprend quatre motoréducteurs. Chaque motoréducteur comprend, ou entraîne en rotation, un moyen d'enroulement/déroulement d'au moins une ligne. De préférence, le moyen d'enroulement / déroulement est de type tambour. Ainsi, de préférence, le motoréducteur 30 comprend un tambour 60 et/ou le motoréducteur 31 comprend un tambour 61 et/ou le motoréducteur 32A comprend un tambour 62A et/ou le motoréducteur 32B comprend un tambour 62B. Plus précisément, le motoréducteur 32A sert à piloter une ligne arrière, en particulier en l'enroulant ou en la déroulant. De préférence, un autre motoréducteur 32B sert à piloter une autre ligne arrière, en particulier en l'enroulant ou en la déroulant. Pour rappel, les actions (enroulement ou déroulement) sur les lignes arrière permettent de piloter l'aile 5. Ainsi, l'actionnement en rotation du motoréducteur 32A, dans un sens pour enrouler ou dans le sens opposé pour dérouler la ligne arrière correspondante, permet d'agir sur l'aile 5 sans action humaine sur la ligne arrière concernée. L'actionnement en rotation de l'autre motoréducteur 32B, dans un sens pour enrouler ou dans le sens opposé pour dérouler l'autre ligne arrière, permet d'agir sur l'aile 5 sans action humaine sur l'autre ligne arrière. Chaque motoréducteur peut être actionné dans un sens de rotation ou dans le sens de rotation opposé indépendamment de l'autre motoréducteur.

Avantageusement, pour limiter la consommation d'énergie nécessaire au fonctionnement de chaque motoréducteur, une liaison, notamment mécanique ou hydraulique, est prévue entre les motoréducteurs 32A, 32B. Par exemple, la liaison s'enclenche lorsque les motoréducteurs fonctionnent en sens de rotation opposés.

En outre, un motoréducteur 30 sert à piloter les lignes avant 10 simultanément ou sensiblement simultanément, en particulier en les enroulant ou en les déroulant. En cas de deux lignes avant 10, les deux lignes sont actionnées ensemble, c'est-à-dire simultanément. Ainsi, l'actionnement en rotation du motoréducteur 30, dans un sens pour enrouler ou dans le sens opposé pour dérouler les lignes avant, permet d'agir sur l'aile 5 sans action humaine sur les lignes avant. Enfin, un motoréducteur 31 sert à piloter la ligne d'envoi **11,** en particulier en l'enroulant ou en la déroulant. Ainsi, l'actionnement en rotation du motoréducteur 31, dans un sens pour enrouler ou dans le sens opposé pour dérouler la ligne d'envoi, permet de gérer le décollage, la récupération et la mise en sécurité de l'aile 5 sans action humaine sur la ligne d'envoi 11.

Comme illustré sur les figures 3, 4 et 8, le dispositif de traction 3 comprend encore la platine 45. La platine 45 est de préférence fixe par rapport au pont 8 de l'embarcation 1 ou du châssis de l'engin 2. La platine 45 est équipée de moyen de passage 40, 42 de lignes par exemple de type poulie, diabolo, ou encore de renvoi fixe à faible coefficient de frottement. La platine 45 permet d'agencer les lignes entre les motoréducteurs sensiblement parallèlement au pont 8 de l'embarcation flottante. Autrement dit, la platine 45 permet de décaler les parties des lignes s'étendant en direction de l'aile 5 à distance du boîtier 35, notamment de sorte à ce que les lignes n'interfèrent pas avec le boîtier 35. Un moyen de maintien 13 de la ligne d'envoi 11 à proximité du mât, par exemple de type poulie ou diabolo ou un élément destiné à permettre un glissement avec peu de frottement est prévu.

De préférence, la platine 45 comprend des capteurs de traction électroniques nécessaires au pilotage et/ou au moins une centrale inertielle, et/ou des capteurs de traction électroniques et/ou au moins une centrale inertielle sont agencés dans des zones spécifiques et stratégiques à proximité de la platine 45.

Alternativement, la platine 45 est mobile par rapport au pont 8 ou au châssis, en particulier afin de maximiser les performances.

Comme illustré sur les figures 1 et 2, l'embarcation flottante ou l'engin terrestre comprend un produit programme d'ordinateur 100 comprenant des instructions de code de programme enregistrées sur un support lisible par ordinateur, et/ou un support d'enregistrement de données 101 lisible par un ordinateur, et/ou un signal 102 d'un support de données.

Le dispositif de traction comprend encore tous les éléments matériels et/ou logiciels permettant de mettre en œuvre le procédé objet de l'invention, notamment des éléments matériels et/ou logiciels conçus pour mettre en œuvre le procédé objet de l'invention et/ou le dispositif comprend des moyens de mettre en œuvre le procédé objet de l'invention tel que décrit plus bas.

Un mode d'exécution d'un procédé de fonctionnement va maintenant être décrit. Ce procédé est avantageusement un procédé de fonctionnement automatique du dispositif de traction tel que décrit précédemment.

De préférence, on procède, dans une première étape, à un gonflage du bord d'attaque 6 de l'aile 5. Pour cela, par exemple, on met l'aile 5 dans le vent. En alternative, on gonfle l'aile avec de l'air comprimé.

On procède à une étape de prise d'altitude de l'aile 5. Lors de cette étape de prise d'altitude, on ne retient l'aile 5 que par la ligne d'envoi 11. Plus précisément, le motoréducteur 31 crée un déroulement de la ligne d'envoi 11 en entraînant le tambour 61 dans le sens de déroulement. Comme illustré sur la figure 3, la ligne d'envoi 11 est maintenue tendue au cours de l'étape de prise d'altitude. Dans cette étape de prise d'altitude, la ou les lignes avant 10 et la ou les lignes arrière 12 restent lâches. A noter que cette prise d'altitude est possible et facilitée par l'aile 5 qui se place, s'oriente, avec une traînée faible de sorte à voler sans tracter, ou sensiblement sans tracter. En effet, lorsque l'aile est retenue par la seule ligne d'envoi, elle se place dans une configuration de vol stable, sollicitant peu la ligne d'envoi.

Par exemple, l'étape de prise d'altitude comprend une étape de hissage de l'aile 5 le long du mât 18 (figure 3 notamment). Pour rappel, une pantoire 22 fixée par exemple au niveau du bord d'attaque 6 de l'aile 5 est reliée, par l'intermédiaire de la fixation largable 26, à la drisse 27. Ainsi, au fur et à mesure que l'on allonge la ligne d'envoi 11 en la maintenant tendue, on raccourcit la drisse 27. En effet, pour rappel, la drisse 27 vient coopérer avec la poulie 25 retenue par rapport au sommet du mât par le moyen de fixation 24. Ainsi, au début de l'ascension de l'aile 5, la drisse 27 vaut environ deux fois la hauteur du mât (cas où la poulie 25 est agencée en haut du mât). Avantageusement, la poulie 25 est agencée à distance du sommet 16 du mât 18 de sorte à éviter que le moyen de fixation 24 et/ou le bord d'attaque 6 ne passe par-dessus le sommet 16, voire se coince pendant l'étape de lancement, suite à des turbulences ou encore à des mouvements de l'embarcation 1 ou de l'engin 2.

Pour prendre de l'altitude, seule la ligne d'envoi 11 est déroulée petit à petit tout en étant maintenue tendue, via le motoréducteur 31. Pour rappel, les lignes avant et arrière demeurent lâches.

Dans le cas d'une prise d'altitude le long du mât 18, on procède ensuite à une étape de libération de l'aile 5 par rapport au mât 18. De préférence, l'aile 5 se trouve au niveau du sommet 16, ou sensiblement au niveau du sommet 16. Pour réaliser cette libération, on actionne la fixation largable 26, par exemple en tirant sur le messager 28 (relié au mousqueton 26) ce qui ouvre le mousqueton 26 le cas échéant. Il en résulte que l'aile 5 est déconnectée du mât. Avantageusement, on peut poursuivre la prise d'altitude de l'aile 5 libérée du mât par déroulement de la ligne d'envoi 11 en la maintenant tendue, l'aile 5 demeurant en vol.

Une fois l'altitude atteinte, par exemple une fois une altitude cible prédéterminée atteinte, on procède à une étape de blocage de la ligne avant 10. Ce blocage de ligne avant 10 est de préférence réalisé par activation du bloqueur 50. Pour rappel, l'activation du bloqueur 50 permet de lier mécaniquement la ligne avant 10 munie du bloqueur 50 à l'embarcation flottante 1 ou à l'engin terrestre roulant et/ou glissant 2, par exemple au pont 8 de l'embarcation flottante ou au châssis de l'engin terrestre 2 via la platine 45. Pour ce faire, on vient bloquer la ligne avant 10 dans la fixation 53. De préférence simultanément ou sensiblement simultanément, on procède à une étape de relâchement et de maintien lâche de la ligne d'envoi 11 de sorte que la ligne d'envoi n'ait plus d'effet sur l'aile du cerf-volant. Autrement dit, pour supprimer la tension sur la ligne d'envoi 11, le motoréducteur 31 est actionné, par exemple sur une portion angulaire donnée, dans le sens du déroulement. L'essentiel des efforts s'appliquant sur l'aile sont repris sur la platine 45 via la ligne avant et le bloqueur. Ceci permet de tracter l'embarcation ou l'engin terrestre. Le bloqueur permet de ne pas solliciter le motoréducteur permettant l'enroulement de la ligne avant.

Simultanément, ou après l'étape de blocage, on procède à une étape de tension des lignes arrière 12. Cette étape de tension est assurée par les motoréducteurs 32A, 32B qui sont actionnés de sorte à enrouler les lignes arrière 12 sur les tambours 62A, 62B, par exemple sur une portion angulaire donnée. Une fois la mise en tension des lignes arrière 12, on utilise les lignes arrière pour piloter l'aile 5. Autrement dit, on utilise les motoréducteurs 32A, 32B pour piloter l'aile 5 via des enroulements et/ou déroulements des tambours 62A, 62B, tout en maintenant les lignes arrière avec une certaine tension de sorte à ce qu'elles ne soient pas lâches. Avantageusement, on utilise le motoréducteur 30 pour enrouler / dérouler les lignes avant, tout en les maintenant avec une certaine tension de sorte à ce qu'elles ne soient pas lâches. A la différence du vol au cours de la phase de prise d'altitude dans laquelle seule la ligne d'envoi 11 est tendue et la traînée est sensiblement nulle, l'utilisation des lignes avant et arrière permet de piloter l'aile 5 et de recueillir les efforts de traction recherchés.

Ensuite, on commande les lignes arrière 12 pour piloter l'aile 5 dans un mode de vol de l'aile 5. Pour cela, comme illustré sur les figures 3 et 8, les lignes avant et arrière 10, 12 s'étendent jusque dans le boîtier 35. Comme évoqué, le ou les motoréducteurs 30, 31, 32A, 32B du dispositif de pilotage permettent d'enrouler ou dérouler les lignes, éventuellement simultanément. Ainsi, on commande le type de vol en fonction de ce qui est le plus approprié en termes de navigation de l'embarcation flottante ou de l'engin terrestre.

Après le vol de l'aile de cerf-volant, en particulier pour la traction de l'embarcation flottante 1 ou de l'engin terrestre 2, on récupère l'aile du cerf-volant. Dans un premier temps, on procède à une étape de tension de la ligne d'envoi 11. Le motoréducteur 31 de la boîte 35 engendre une rotation du tambour 61 de sorte à enrouler la ligne d'envoi automatiquement, notamment jusqu'à sa mise sous tension. Simultanément, on procède à une étape de relâchement et de maintien lâche des lignes avant et arrière 10, 12. Cette étape de relâchement et de maintien lâche est assurée en déroulant les lignes avant et arrière 10, 12 par l'intermédiaire des motoréducteurs 30, 32A, 32B de la boîte 35. A noter que pour relâcher la ligne avant 10, il suffit de tirer sur la cordelette 51 de libération du bloqueur 50 ce qui a pour effet de laisser coulisser la ligne avant par rapport à la fixation 53. Dans un second temps, on enroule la ligne d'envoi 11 par l'intermédiaire du motoréducteur 31 qui permet d'enrouler la ligne 11 sur le tambour 61. Pour rappel, la ligne d'envoi 11 frotte ou glisse ou coopère avec la poulie 13. Ainsi, on au fur et à mesure que l'on enroule la ligne d'envoi **11,** l'aile se rapproche de la poulie 13 (figures 3 et 8). La poulie 13 étant agencée de préférence à proximité du pied du mât 18, l'enroulement de la ligne d'envoi ramène l'aile 5 au niveau de l'embarcation flottante 1 ou de l'engin terrestre roulant et/ou glissant 2.

L'invention porte aussi sur une utilisation d'un bloqueur 50 du type formant une gaine tressée entourant une ligne, notamment une ligne avant, pour retenir une aile 5 d'un cerf-volant 4 de traction de l'embarcation ou de l'engin terrestre. Cette utilisation est par exemple faite dans le cadre du procédé de fonctionnement décrit plus haut.

Pour rappel, le dispositif de traction 3 est de préférence destiné à tracter une embarcation flottante 1, ou à mouvoir un engin terrestre 2 roulant et/ou glissant.

En remarque, la solution atteint donc l'objectif recherché de fournir un procédé de fonctionnement d'un dispositif de traction par cerf-volant, en particulier destiné à tracter une embarcation flottante, améliorant le décollage, le vol et la récupération du cerf-volant et présente les avantages suivants :
- elle est économique ;
- elle est facile à implanter sur une embarcation ou un engin terrestre.

## Revendications

1. Procédé de fonctionnement d'un dispositif de traction (3) d'une embarcation flottante (1) ou d'un engin terrestre roulant et/ou glissant (2), comprenant un cerf-volant (4) incluant :
- une aile (5) munie d'un bord d'attaque (6),
- une ligne d'envoi (11),
- au moins une ligne avant (10) équipée d'un bloqueur (50), et
- des lignes arrière (12),
le procédé comprenant les étapes suivantes :
- une étape de prise d'altitude de l'aile (5) en ne la retenant que par la ligne d'envoi (11), les lignes avant (10) et arrière (12) restant lâches, suivie, une fois une altitude atteinte, notamment une fois une altitude cible atteinte, de
- une étape de blocage de l'au moins une ligne avant (10) par activation du bloqueur (50) permettant de lier mécaniquement l'au moins une ligne avant (10) à l'embarcation flottante (1) ou à l'engin terrestre roulant et/ou glissant (2), et une étape de relâchement et de maintien lâche de la ligne d'envoi (11).

2. Procédé selon la revendication précédente, **caractérisé en ce qu'**il comprend, simultanément ou après l'étape de blocage, une étape de tension des lignes arrière (12) de sorte à les utiliser pour piloter l'aile (5).

3. Procédé selon l'une des revendications précédentes, **caractérisé en ce que** le procédé comprend une étape préalable de gonflage du bord d'attaque (6) de l'aile (5), notamment une étape de gonflage de l'aile par une mise dans le vent de l'aile (5), avant l'étape de prise d'altitude.

4. Procédé selon l'une des revendications précédentes, **caractérisé en ce que** l'étape de prise d'altitude comprend une étape de hissage de l'aile (5) le long d'un mât (18) de l'embarcation flottante (1) ou de l'engin terrestre roulant et/ou glissant (2).

5. Procédé selon la revendication précédente, **caractérisé en ce que** le procédé comprend une étape d'orientation automatique de l'aile (5) par rapport au vent, notamment par l'intermédiaire d'une potence (180) articulée par rapport à un tel mât (18).

6. Procédé selon l'une des revendications 4 ou 5, **caractérisé en ce que** l'étape de prise d'altitude comprend une étape de libération de l'aile (5) par rapport à un tel mât (18), puis une étape de prise d'altitude de l'aile (5) libérée d'un tel mât (18).

7. Procédé selon l'une des revendications précédentes, **caractérisé en ce que** l'étape de blocage, en particulier l'étape de blocage, l'étape de tension et l'étape de relâchement et de maintien lâche, sont suivies par une étape de pilotage par commande des lignes arrière (12) pour piloter l'aile (5) dans un mode de vol de l'aile (5), notamment par l'intermédiaire d'au moins un motoréducteurs (31) d'un dispositif de pilotage (30).

8. Procédé selon la revendication précédente, **caractérisé en ce que**, suite à l'étape de pilotage, on procède à :
- une étape de tension de la ligne d'envoi (11), et
- une étape de relâchement et de maintien lâche des lignes avant (10) et arrière (12), notamment en enroulant la ligne d'envoi (11) et/ou en déroulant les lignes avant (10) et arrière (12).

9. Procédé selon la revendication précédente, **caractérisé en ce qu'**on enroule la ligne d'envoi (11) de sorte à ramener l'aile (5) sur l'embarcation flottante (1) ou sur l'engin terrestre roulant et/ou glissant (2).

10. Dispositif de traction (3) d'une embarcation flottante (1) ou d'un engin terrestre roulant et/ou glissant (2) comprenant un ensemble d'actionneurs, notamment de type motoréducteur et/ou bloqueur, **caractérisé en ce qu'**il comprend des éléments matériels et/ou logiciels mettant en œuvre le procédé selon l'une des revendications précédentes, notamment des éléments matériels et/ou logiciels conçus pour mettre en œuvre le procédé selon l'une des revendications précédentes, et/ou le dispositif comprenant des moyens de mettre en œuvre le procédé selon l'une des revendications précédentes.

11. Embarcation flottante (1) ou engin terrestre roulant et/ou glissant (2), caractérisé(e) en ce qu'elle ou il comprend un dispositif de traction (3) selon la revendication précédente.

12. Produit programme d'ordinateur téléchargeable depuis un réseau de communication et/ou enregistré sur un support de données lisible par un ordinateur et/ou exécutable par un ordinateur, **caractérisé en ce qu'**il comprend des instructions qui, lorsque le programme est exécuté par l'ordinateur, conduisent celui-ci à mettre en œuvre le procédé selon l'une quelconque des revendications 1 à 9.

13. Support d'enregistrement de données (101), lisible par un ordinateur, sur lequel est enregistré un programme d'ordinateur comprenant des instructions de code de programme de mise en œuvre du procédé selon l'une des revendications 1 à 9 ou support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 9.

14. Signal (102) d'un support de données, portant le produit programme d'ordinateur (100) selon la revendication 12.

15. Utilisation d'un bloqueur (50) du type formant une gaine tressée entourant une ligne pour retenir une aile (5) d'un cerf-volant (4) de traction d'une embarcation ou d'un engin terrestre dans le procédé selon l'une des revendications 1 à 9.

## Patentansprüche

1. Verfahren zum Betreiben einer Zugvorrichtung (3) für ein schwimmendes Wasserfahrzeug (1) oder ein rollendes und/oder gleitendes Landfahrzeug (2), die einen Drachen (4) umfasst, beinhaltend:
- ein Segel (5), das mit einer Anströmkante (6) versehen ist;
- eine Flugleine (11),
- mindestens eine vordere Leine (10), die mit einer Blockiereinrichtung (50) ausgestattet ist, und
- hintere Leinen (12),
wobei das Verfahren die folgenden Schritte umfasst:
- einen Schritt des Gewinnens an Höhe des Segels (5), wobei es nur durch die Flugleine (11) gehalten wird, während die vordere (10) und hintere (12) Leine lose bleiben, gefolgt von, sobald eine Höhe erreicht ist, insbesondere sobald eine Zielhöhe erreicht ist,
- einem Schritt des Blockierens der mindestens einen vordere Leine (10) durch Aktivieren der Blockiereinrichtung (50), was es ermöglicht, die mindestens eine vordere Leine (10) mechanisch mit dem schwimmenden Wasserfahrzeug (1) oder mit dem rollenden und/oder gleitenden Landfahrzeug (2) zu verbinden, und einem Schritt des Nachgebens und Losehaltens der Flugleine (11).

2. Verfahren nach dem vorhergehenden Anspruch, **dadurch gekennzeichnet, dass** es, gleichzeitig mit oder nach dem Schritt des Blockierens, einen Schritt des Spannens der hinteren Leinen (12) umfasst, so dass sie zum Lenken des Segels (5) verwendet werden.

3. Verfahren nach einem der vorhergehenden Ansprüche, **dadurch gekennzeichnet, dass** das Verfahren einen vorherigen Schritt des Aufblähens der Anströmkante (6) des Segels (5), insbesondere einen Schritt des Aufblähens des Segels durch ein Versetzen des Segels (5) in den Wind, vor dem Schritt des Gewinnens an Höhe umfasst.

4. Verfahren nach einem der vorhergehenden Ansprüche, **dadurch gekennzeichnet, dass** der Schritt des Gewinnens an Höhe einen Schritt des Hissens des Segels (5) entlang eines Mastes (18) des schwimmenden Wasserfahrzeugs (1) oder des rollenden und/oder gleitenden Landfahrzeugs (2) umfasst.

5. Verfahren nach dem vorhergehenden Anspruch, **dadurch gekennzeichnet, dass** das Verfahren einen Schritt des automatischen Ausrichtens des Segels (5) in Bezug auf den Wind umfasst, insbesondere über einen Ausleger (180), der an einen solchen Mast (18) angelenkt ist.

6. Verfahren nach einem der Ansprüche 4 oder 5, **dadurch gekennzeichnet, dass** der Schritt des Gewinnens an Höhe einen Schritt des Freigebens des Segels (5) von einem solchen Mast (18) umfasst, dann einen Schritt des Gewinnens an Höhe des von einem solchen Mast (18) freigegebenen Segels (5).

7. Verfahren nach einem der vorhergehenden Ansprüche, **dadurch gekennzeichnet, dass** auf den Schritt des Blockierens, insbesondere den Schritt des Blockierens, den Schritt des Spannens und den Schritt des Nachgebens und Losehaltens, ein Schritt des Lenkens durch Steuern der hinteren Leinen (12) folgt, um das Segel (5) in einem Flugmodus des Segels (5) zu lenken, insbesondere über mindestens einen Getriebemotor (31) einer Lenkvorrichtung (30).

8. Verfahren nach dem vorhergehenden Anspruch, **dadurch gekennzeichnet, dass** nach dem Schritt des Lenkens Folgendes vorgenommen wird:
- ein Schritt des Spannens der Flugleine (11), und
- ein Schritt des Nachgebens und Losehaltens der vorderen (10) und hinteren (12) Leinen, insbesondere durch Aufwickeln der Flugleine (11) und/oder durch Abwickeln der vorderen (10) und hinteren (12) Leinen.

9. Verfahren nach dem vorhergehenden Anspruch, **dadurch gekennzeichnet, dass** die Flugleine (11) so aufgewickelt wird, dass das Segel (5) auf das schwimmende Wasserfahrzeug (1) oder auf das rollende und/oder gleitende Landfahrzeug (2) zurückgeholt wird.

10. Zugvorrichtung (3) für ein schwimmendes Wasserfahrzeug (1) oder ein rollendes und/oder gleitendes Landfahrzeug (2), umfassend eine Anordnung von Aktoren, insbesondere vom Typ Getriebemotor und/oder Blockiereinrichtung, **dadurch gekennzeichnet, dass** sie Hardware- und/oder Softwareelemente umfasst, die das Verfahren nach einem der vorhergehenden Ansprüche durchführen, insbesondere Hardware- und/oder Softwareelemente, die dazu ausgelegt sind, das Verfahren nach einem der vorhergehenden Ansprüche durchzuführen, und/oder wobei die Vorrichtung Mittel zur Durchführung des Verfahrens nach einem der vorhergehenden Ansprüche umfasst.

11. Schwimmendes Wasserfahrzeug (1) oder rollendes und/oder gleitendes Landfahrzeug (2), **dadurch gekennzeichnet, dass** es eine Zugvorrichtung (3) nach dem vorhergehenden Anspruch umfasst.

12. Computerprogrammprodukt, das aus einem Kommunikationsnetzwerk heruntergeladen werden kann und/oder auf einem computerlesbaren Datenmedium gespeichert ist und/oder durch einen Computer ausgeführt werden kann, **dadurch gekennzeichnet, dass** es Anweisungen umfasst, die bei der Ausführung des Programms durch den Computer diesen veranlassen, das Verfahren nach einem der Ansprüche 1 bis 9 durchzuführen.

13. Computerlesbares Datenspeichermedium (101), auf dem ein Computerprogramm gespeichert ist, das Programmcodeanweisungen zur Durchführung des Verfahrens nach einem der Ansprüche 1 bis 9 umfasst, oder computerlesbares Speichermedium, das Anweisungen umfasst, die bei ihrer Ausführung durch einen Computer diesen veranlassen, das Verfahren nach einem der Ansprüche 1 bis 9 durchzuführen.

14. Signal (102) eines Datenmediums, welches das Computerprogrammprodukt (100) nach Anspruch 12 trägt.

15. Verwendung einer Blockiereinrichtung (50) des Typs, der einen geflochtenen Mantel bildet, der eine Leine umgibt, um ein Segel (5) eines Drachens (4) zum Ziehen eines Wasserfahrzeugs oder eines Landfahrzeugs bei dem Verfahren nach einem der Ansprüche 1 bis 9 zu halten.

## Claims

1. Method for operating a towing device (3) of a floating vessel (1) or of a rolling and/or sliding land vehicle (2), comprising a kite (4) including:
- a sail (5) provided with a leading edge (6),
- a flying line (11),
- at least one front line (10) equipped with a clutch (50), and
- rear lines (12),
the method comprising the following steps:
- a step of making the sail (5) gain altitude, holding it only by the flying line (11), the front (10) and rear (12) lines remaining slack, followed, once an altitude has been reached, notably once a target altitude has been reached, by
- a step of locking the at least one front line (10) by activation of the clutch (50) making it possible to mechanically connect the at least one front line (10) to the floating vessel (1) or to the rolling and/or sliding land vehicle (2), and a step of releasing the flying line (11) and keeping it slack.

2. Method according to the preceding claim, **characterized in that** it comprises, simultaneously with or after the locking step, a step of tensioning the rear lines (12) so as to use them to control the sail (5).

3. Method according to either of the preceding claims, **characterized in that** the method comprises a prior step of inflating the leading edge (6) of the sail (5), notably a step of inflating the sail by turning the sail (5) into the wind, prior to the step of gaining altitude.

4. Method according to one of the preceding claims, **characterized in that** the step of gaining altitude comprises a step of hoisting the sail (5) along a mast (18) of the floating vessel (1) or of the rolling and/or sliding land vehicle (2).

5. Method according to the preceding claim, **characterized in that** the method comprises a step of automatically orienting the sail (5) with respect to the wind, notably by way of a boom (180) articulated with respect to such a mast (18).

6. Method according to either of Claims 4 and 5, **characterized in that** the step of gaining altitude comprises a step of freeing the sail (5) with respect to such a mast (18), then a step of making the sail (5) freed from such a mast (18) gain altitude.

7. Method according to one of the preceding claims, **characterized in that** the locking step, in particular the locking step, the tensioning step and the step of releasing and keeping slack, are followed by a control step through control of the rear lines (12) in order to control the sail (5) in a flight mode of the sail (5), notably by way of at least one geared motor (31) of a control device (30).

8. Method according to the preceding claim, **characterized in that**, subsequent to the control step, the following is carried out:
- a step of tensioning the flying line (11), and
- a step of releasing the front (10) and rear (12) lines and keeping them slack, notably by winding in the flying line (11) and/or unwinding the front (10) and rear (12) lines.

9. Method according to the preceding claim, **characterized in that** the flying line (11) is wound in so as to bring the sail (5) back onto the floating vessel (1) or onto the rolling and/or sliding land vehicle (2).

10. Towing device (3) of a floating vessel (1) or of a rolling and/or sliding land vehicle (2), comprising a set of actuators, notably of the geared motor and/or clutch type, **characterized in that** it comprises hardware and/or software elements implementing the method according to one of the preceding claims, notably hardware and/or software elements designed to implement the method according to one of the preceding claims, and/or the device comprising means for implementing the method according to one of the preceding claims.

11. Floating vessel (1) or rolling and/or sliding land vehicle (2), **characterized in that** it comprises a towing device (3) according to the preceding claim.

12. Computer program product that is downloadable from a communication network and/or recorded on a data medium that is readable by a computer and/or executable by a computer, **characterized in that** it comprises instructions that, when the program is executed by the computer, lead the latter to implement the method according to any one of Claims 1 to 9.

13. Computer-readable data recording medium (101) on which a computer program comprising program code instructions for implementing the method according to one of Claims 1 to 9 is recorded, or a computer-readable recording medium comprising instructions that, when they are executed by a computer, lead the latter to implement the method according to any one of Claims 1 to 9.

14. Signal (102) of a data medium, carrying the computer program product (100) according to Claim 12.

15. Use of a clutch (50) of the type forming a braided sleeve surrounding a line for holding a sail (5) of a kite (4) for towing of a vessel or of a land vehicle in the method according to one of Claims 1 to 9.
